# EUROPEAN PATENT APPLICATION

(11) **EP 4 810 231 A1**
(43) Date of publication of application: **23.09.2026**
(21) Application number: 25165278.0
(22) Date of filing: 21.03.2025
(51) Int. Cl.: B29C 64/118, B22F 12/00, B22F 12/37, B22F 12/53, B22F 12/63, B29C 64/194, B29C 64/209, B29C 64/232, B29C 64/241, B29C 64/245, B33Y 10/00, B33Y 30/00, B28B 1/00

(54) **3D PRINTING APPARATUS AND METHOD FOR 3D PRINTING OF LONGITUDINAL HOLLOW BEAMS**

(71) Applicant: Orbital Matter Poland Sp. z o.o., 00-819 Warsaw (PL)
(72) Inventor: Ihnatisin, Robert, 00-819 Warsaw (PL); Legutko, Damian, 00-819 Warsaw (PL); Sipa, Szymon, 00-819 Warsaw (PL)
(74) Representative: Ptasinski, Konrad Witold

(57) **Abstract**

A 3D printing apparatus comprising a build platform (1), an extruder head (2), whose outlet is directed towards the lateral surface of the build platform (1), and at least one pushing element (3), which is positioned in the peripheral region of the build platform (1) so that it is adjacent to its side surface, a drive system (5) configured to cause rotation of the build platform (1) relative to the at least one pushing element (3) and the extruder head (2), wherein the at least one pushing element (3) has a pushing surface (7) positioned at a height greater than the outlet of the extrusion head (2) relative to the build platform (1), such that during the printing process, the rotational movement of the build platform (1) causes the pushing surface (7) to make contact with the extruded and hardened material at a position that forces the material to be pushed away from the extrusion head (2).

## Description

The present invention relates to a 3D printing apparatus and method for 3D printing of longitudinal hollow beams. The objects of the present invention are applied in the production of lightweight load-bearing structures in the aerospace, space, and automotive industries.

The development of additive manufacturing technology has enabled the fabrication of high-precision structures with complex geometries, including longitudinal components featuring internally hollow structures. This technique is recognized as a promising candidate for manufacturing load-bearing structures used in various components across aerospace, land vehicle, and space applications, including spacecraft and space stations.

3D printing technology is particularly attractive for such applications, as it allows for the production of monolithic yet internally hollow structural elements that exhibit reduced mass while demonstrating improved mechanical characteristics.

Among additive manufacturing methods for relatively long, internally hollow components, continuous extrusion-based printing using multi-axis systems is noteworthy. In these systems, the extruder moves along a trajectory defined by coordinated linear axes. Another viable approach is Fused Granular Fabrication (FGF), which enables the formation of large-scale structures using polymer or composite granules. Additionally, techniques based on layer-by-layer deposition, combined with dynamic adjustment of the print head orientation, facilitate adaptation to complex geometries.

One of the most promising techniques for additive manufacturing of long, hollow components is continuous printing based on a rotary worktable. The rotary table enables dynamic orientation adjustment of the printed object relative to the extrusion head, leading to more uniform material distribution and enhanced mechanical integrity of the structures. In systems utilizing polar-Cartesian kinematics, smooth shaping of cylindrical and conical surfaces is possible, making this technology particularly suitable for producing high-strength, mass-optimized components. The rotary table typically comprises a precision-controlled spindle that ensures uniform rotational motion, a cooling system to stabilize the geometry of the fabricated structure, and a synchronization module that aligns extrusion with rotational movement to guarantee precise layering.

In space environments, the use of additive manufacturing processes based on a rotary worktable opens the possibility of fabricating structures in orbit or on planetary surfaces using locally available raw materials. Despite significant engineering challenges, further advancements in process control technology and extrusion trajectory optimization will allow for the full utilization of this method's potential in advanced engineering applications.

An international patent application no. WO2014092651A1 discloses a 3D printer with a controllable rotary surface and method for 3D printing. The 3D printer comprises at least one actuator, a planetary gear system configured to be engaged to the actuator, and a plurality of output couplings, each of the plurality of output couplings being configured to couple independently to at least one gear of the planetary gear system, and to engage independently with the controllable rotary surface. The disclosed 3D printer uses polar coordinates therefore includes logic for converting Cartesian coordinates to polar coordinates during printing. According to one embodiment, the 3D printer includes a printhead and a printbed, wherein the printhead is configured to be movable in a radial manner relative to a centre of the printbed (along radial axis) and linearly in the Z-axis (along a vertical track). The printbed is configured to be rotatable around an axis that is situated at or around the centre of the printbed. The 3D printer also includes a build drum that is configured to rotate the printbed. During use of the 3D printer, when a target point is provided, the printhead is brought to desired radial and Z positions, corresponding respectively to a radial factor in the polar coordinate system and the height of the point in three dimensional space. In addition, the printbed is rotated at an angle in the polar coordinate system which aligns the target point on the printbed with the printhead.

An international patent application no. WO2017087375A1 discloses a device and method for additive manufacturing. The device has an extrusion nozzle and a printing surface, wherein the extrusion nozzle is configured to deposit material onto a printing surface, and the printing surface is configured to rotate about a primary axis. The primary axis is normal to a centroid of the printing surface, and the printing surface is also tiltable. The 3D printing apparatus is configured to print a continuous filament onto the printing surface in a continuous helical fashion rather than breaking the filament in between successive layers or slices. The extruder can be used to print a helical tangible model, i.e. a tangible model which is formed of a continuous, or nearly continuous, helical filament. This can be achieved by laying a coil of material into a tight spiral, which sticks to itself on successive rings and wherein successive slices or layers are added to one another to increase the depth of the helical tangible model. The extruder nozzle or printing surface is configured to move axially with respect to the primary axis so as to adjust for the growing height of the helical tangible model. Once a first coil or layer is completed, the extruder nozzle is translated either toward or away from the printing surface while laying the filament, or alternatively, the printing surface is be actuated so as to change height.

An European patent application EP4344854A2 discloses a 3D printing apparatus for printing a satellite component. The 3D printing apparatus comprises a housing, a seal arranged movably inside the housing such that the seal partitions the housing into first and second chambers that are fluidically isolated from each other and a nozzle in fluid connection with the second chamber. The 3D printing assembly comprises a printing platform for receiving printing material extruded out of the second chamber through the nozzle. The 3D printing assembly also comprises a motor arranged to rotate the 3D printing apparatus with respect to the printing platform and a linear pushing mechanism arranged to move the printing platform away from the nozzle, wherein the linear pushing mechanism comprises one or more motor driven wheels. In order to print a cylindrical beam, the motor is arranged to rotate the 3D printing assembly in an X and Y axis with respect to the printing platform, while the printing platform is incrementally pushed away from the 3D printing assembly in a Z axis by the linear pushing mechanism with each full rotation of the 3D printing assembly. Thus, the printing may be in a continuous spiral movement with respect to the printing platform. The ratio between the speed of rotation and speed of linear pushing may conveniently be tuned in order to increase or decrease the size of the layers of the extruded printing material.

The technical problem facing the present invention is to provide a 3D printing apparatus that constitutes a structurally simple solution, characterized by a limited number of components, thereby ensuring greater reliability and economic benefits. It is desirable for the 3D printing apparatus to enable the fabrication of longitudinal hollow beams that can extend over considerable lengths. Furthermore, it is desirable for the 3D printing apparatus to allow for the modification of geometric parameters of the produced longitudinal hollow beams, particularly in a dynamic manner, to ensure, among other things, the bending of beams relative to the longitudinal direction. Additionally, it is desirable for the 3D printing apparatus to facilitate the fabrication of longitudinal hollow beams in terrestrial environments and in outer space.

In one aspect, the present invention provides a 3D printing apparatus comprising: a build platform, an extruder head, whose outlet is directed towards the lateral surface of the build platform, and at least one pushing element, which is positioned in the peripheral region of the build platform so that it is adjacent to its side surface, a drive system configured to cause rotation of the build platform relative to the at least one pushing element and the extruder head, wherein the at least one pushing element has a pushing surface positioned at a height greater than the outlet of the extrusion head relative to the build platform, such that during the printing process, the rotational movement of the build or the extruder head with at least one pushing element causes the pushing surface to make contact with the extruded and hardened material at a position that forces the material to be pushed away from the extrusion head.

According to some embodiments of the invention the height at which the pushing surface is placed relative to the height of the outlet of the extruder head follows formula $z = h ⋅ \frac{θ}{2 π}$ Where:
z - the height of the pushing surface of the pushing element
h - desirable layer height
θ - angular distance of the pushing surface of the pushing element from the outlet of the extruder head, in radians (from 0 to 2π).

According to some embodiments of the invention the 3D printing apparatus further comprises a cap mounted on the build platform, wherein the cap is loosely fitted onto the build platform.

According to some embodiments of the invention the drive system includes electric drive, manual drive, hydraulic drive, pneumatic drive or magnetic drive.

According to some embodiments of the invention the drive system includes stepper motor, servo motor, brushed motor or brushless motor.

According to some embodiments of the invention the build platform is rotatable, and the extruder head and at least one pushing element are fixed, or the build platform is fixed, and the extruder head and at least one pushing element are rotatable.

According to some embodiments of the invention the at least one pushing element is in the form of a roller with a pushing surface on the lateral track, a roller with a pushing surface on the top surface, a pin with a pushing surface on top end or a ring-shaped structure whose upper surface forms the pushing surface.

According to some embodiments of the invention the 3D printing apparatus comprises a multiple pushing elements arranged along the perimeter of the build platform, where each pushing element has a different height of the pushing surface relative to the outlet of the extruder head, with the height of the pushing surface of the pushing element closest to the direction opposite to the movement of the printed material being greater than the height of the pushing surface of the pushing element closest to the direction of the movement of the printed material.

According to some embodiments of the invention the at least one pushing element has an adjustable height by use of a height adjustment system.

According to some embodiments of the invention the 3D printing apparatus further comprises an extruder head offset system configured to change the distance of the extruder head from the side surface of the build platform.

According to some embodiments of the invention the 3D printing apparatus further comprises a pushing element offset system configured to change the distance of the pushing element from the side surface of the build platform.

According to some embodiments of the invention the build platform has shape of a cylinder, a regular or irregular prism with a triangular, quadrilateral, pentagonal, hexagonal, or higher-order polygonal base, an elliptical cylinder, or another figure with an irregular perimeter.

In another aspect, the present invention provides a method for 3D printing of longitudinal hollow beam by a 3D printing apparatus having a build platform, an extruder head, whose outlet is directed towards the lateral surface of the build platform, and at least one pushing element, which is positioned in the peripheral region of the build platform so that it is adjacent to its side surface, a drive system configured to cause rotation of the build platform relative to the at least one pushing element and the extruder head, the method comprising:
a) rotating the build platform relative to the at least one pushing element and the extruder head or rotating the at least one pushing element and the extruder head relative to the build platform,
b) extruding a printing material from the extrusion head onto the side surface of the build platform,
c) allowing the extruded and hardened printing material to reach the pushing surface of the pushing element that is configured to push the extruded and hardened printing material away from the extruder head.

According to some embodiments of the invention the method further comprising changing the height of the pushing surface of the at least on pushing element.

According to some embodiments of the invention the method further comprising extruding a printing material from the extrusion head onto the side area of the previously extruded printing material, by changing the distance of the extruder head from the side surface of the build platform.

The 3D printing apparatus according to the present invention enables the fabrication of longitudinal hollow beams of various diameters from a compact initial volume using additive manufacturing techniques. This allows for efficient material utilization while enabling the production of beams significantly larger than the build volume traditionally associated with 3D printing.

A key advantage of the invention is the capability to manufacture beams with diverse cross-sectional geometries, including circular, rectangular, and polygonal shapes with more than four sides. The 3D printing apparatus according to the present invention enables the continuous fabrication of beams ranging from 1 mm to 1 km in length, both in normal gravity environments on Earth and in microgravity conditions in outer space, provided that a sufficient material supply is available. In normal gravity, the beam can be printed either vertically or horizontally, with a support structure ensuring its stability during the printing process.

The invention is particularly advantageous for space applications, where the combination of microgravity and vacuum conditions allows for the efficient production of extremely long beams. These beams can be used for in-space manufacturing and the assembly of large-scale structures that would otherwise be economically unfeasible using conventional manufacturing and transport methods due to the high cost of launching pre-assembled components into space.

Another significant advantage of the present invention is the optimized printing mechanism, which achieves high efficiency while utilizing a minimal number of components. This design simplifies operation, reduces maintenance requirements, and enhances overall system reliability.

A key differentiating feature of the invention is that, beyond the initial printed layer, the apparatus does not require direct interaction with the printed beam. Despite this, it is capable of applying a substantially higher force to the beam while maintaining a secure attachment to the printing mechanism. This high force allows the printed beam to exert significant pressure on external structures, enabling applications such as the deployment of solar panels or other space-based mechanisms attached to the end of the printed beam.

One or more embodiments of the invention will now be described, by way of example only, with reference to the accompanying drawings, in which:
Figure 1 presents an axonometric view of a first embodiment of a 3D printing apparatus according to the invention;
Figure 2 presents an axonometric view of an embodiment of a 3D printing apparatus according to the invention;
Figure 3 presents a side view of the 3D printing apparatus from Fig. 2;
Figure 4 presents an axonometric view, including an enlarged detail A, of the 3D printing apparatus from Fig. 2 during operation;
Figures 5A-C present axonometric views of further embodiments of a 3D printing apparatus according to the invention;
Figures 6A-C present top views of further embodiments of a 3D printing apparatus according to the invention;
Figure 7 presents an axonometric view of another embodiment of a 3D printing apparatus according to the invention;
Figure 8 presents a cross-sectional view of a further embodiment of a 3D printing apparatus according to the invention;
Figure 9 presents a side view of the 3D printing apparatus from Fig. 8 during operation;
Figures 10A-B present axonometric views of further embodiments of a 3D printing apparatus according to the invention;
Figures 11A-B present axonometric views of further embodiments of a 3D printing apparatus according to the invention;
Figures 12A-B present, respectively, an axonometric view and a side view of another embodiment of a 3D printing apparatus according to the invention during operation,
Figures 13A-B present a schematic side view of different embodiments of a 3D printing apparatus according to the invention along with the method of determining the geometric parameters of components.

### Example 1

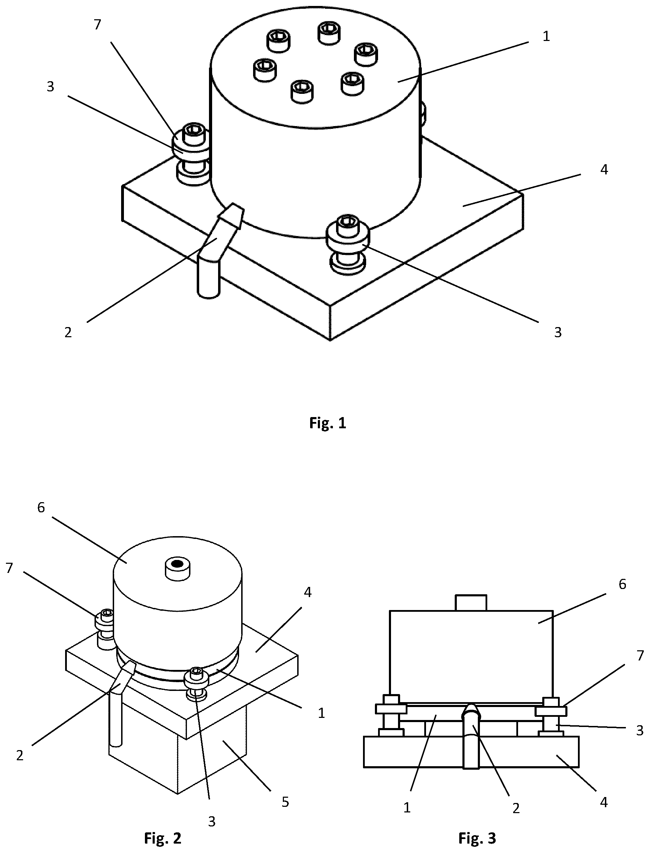

An embodiment of the 3D printing apparatus according to the present invention is shown in axonometric view in Fig. 1.

As illustrated in Fig. 1, in general, the 3D printing apparatus comprises a build platform 1, an extruder head 2, whose outlet is directed towards the lateral surface of the build platform 1, and at least one pushing element 3, which is positioned in the peripheral region of the build platform 1 so that it is adjacent to its lateral surface. The build platform 1 is mounted on a base plate 4, on which at least one pushing element 3 is also arranged.

As can be observed in Fig. 1, the 3D printing apparatus according to this embodiment includes three pushing elements 3, distributed along the perimeter of the build platform 1 at equal angular intervals. However, the number and arrangement of the pushing elements 3 are not limited to those shown in this embodiment, and in alternative embodiments of the invention, a smaller or larger number of pushing elements 3 may be used, arranged in various configurations within the peripheral region of the build platform 1.

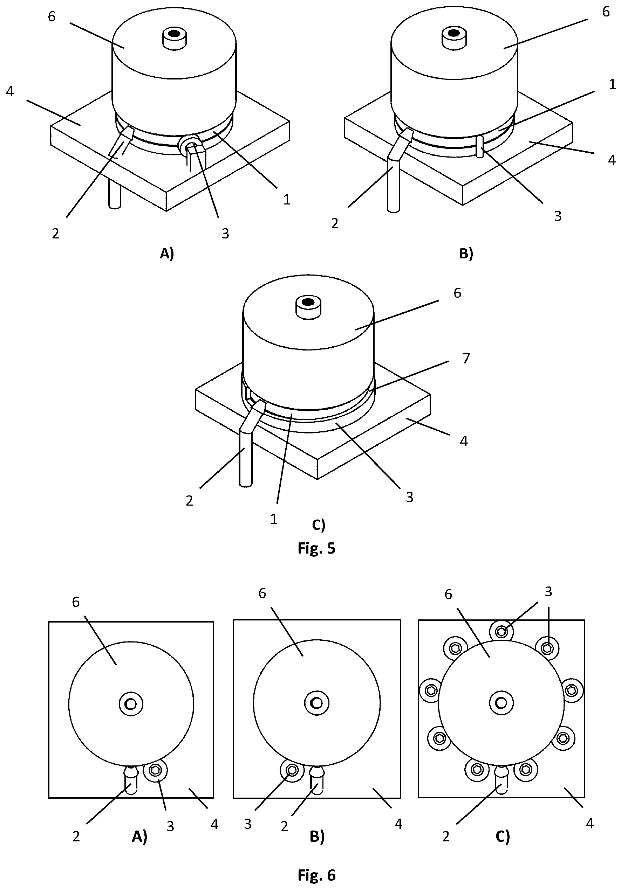

Non-limiting examples illustrating different alternative arrangements of the pushing elements 3 are depicted in Fig. 6A-C. In particular, Fig. 6A presents a pushing element 3 positioned in close proximity to the extruder head 2 in a counterclockwise direction; Fig. 6B presents a pushing element 3 positioned in close proximity to the extruder head 2 in a clockwise direction; whereas Fig. 6C presents nine pushing elements 3 distributed along the perimeter of the build platform 1 with equal angular spacing.

Returning to Fig. 1, in the present embodiment, the build platform 1 takes the shape of a cylinder and is capable of rotating around a rotational axis, which constitutes a vertical axis. In this embodiment, the rotational movement of the build platform 1 is ensured by a drive system 5, which allows for precise control of the rotational motion parameters of the build platform 1 itself.

The drive system 5 used in this embodiment is an electric motor of the stepper motor type. However, this does not limit the scope of the invention, and in alternative embodiments, other types of drive systems 5 may be employed, provided that they ensure the desired characteristics of the rotational movement. Non-limiting examples of drive systems 5 used to induce the rotational movement of the build platform 1 include manual drives, hydraulic drives, pneumatic drives, or magnetic drives.

A particularly advantageous group of drive systems 5 comprises electric drives, which enable favorable rotational motion parameters over a wide range while maintaining high precision, repeatability, and relatively easy control. Electric drive systems include, without limitation, stepper motors, servo motors, brushed motors, and brushless motors.

The drive system 5 may drive the build platform 1 directly (as illustrated in Fig. 2) or through the use of intermediary elements such as gear transmissions, including, without limitation, gear, belt, or chain transmissions. The use of intermediary transmission elements allows for further modification of rotational motion parameters, such as speed and torque, without the need to modify the drive system 5 itself. Conversely, employing a drive system 5 that directly transfers torque to the build platform 1 simplifies the design, reduces the number of components in the resulting 3D printing apparatus, and thereby enhances the durability and reliability of such a construction.

Referring again to Fig. 1, the cylindrical build platform 1 is capable of rotational movement, while both the extruder head 2 and the pushing elements 3 remain stationary. Although the build platform 1 in this first embodiment takes the shape of a cylinder, its geometry is not limited to this specific design. In alternative embodiments, the build platform 1 may take on different shapes, such as a regular or irregular prism with a triangular, quadrilateral, pentagonal, hexagonal, or higher-order polygonal base, an elliptical cylinder, or another figure with an irregular perimeter.

Notably, the shape of the build platform 1, particularly its cross-sectional shape (perimeter shape), determines the shape of the printed longitudinal hollow beams. This is because the printing material extruded from the extruder head 2 is deposited onto the lateral surface of the build platform 1, replicating its perimeter shape. Thus, the 3D printing apparatus presented in this embodiment is specifically designed for manufacturing longitudinal hollow beams with a circular cross-section (corresponding to the cylindrical build platform 1). However, alternative embodiments of 3D printing apparatus intended for manufacturing longitudinal hollow beams with different cross-sectional shapes will be illustrated in further embodiments of the invention.

The build platform 1 can be made of metal, ceramics, plastics, or any rigid material, depending on the selected printing material. For example, if printing with a thermally sensitive polymer, it is preferable for the build platform 1 to be made of a thermally conductive metal such as aluminum, copper, steel, or any of their alloys. Alternatively, if printing with a light-cured photopolymer, the build platform 1 may be made of a low-friction plastic such as PTFE.

One of the most important components of the 3D printing apparatus according to the present invention is the extruder head 2. While this component is depicted schematically in the figures, it represents a well-developed and widely known construction in the field of technology. Therefore, it will not be described in further detail to maintain the clarity of this disclosure. The person skilled in the art to whom this description is addressed will know that it is also possible to use an extruder head 2 that is arranged at an angle to the side surface of the build platform 1, whereby deflection in virtually any direction is possible. Thus, in the present invention, the type and technology of the extruder head 2, its geometric arrangement, including the angle of inclination, are dependent on the type of material being extruded and selected appropriately for the application. In the present description of the invention, the reference to the height of the extruder head 2, or rather to the height of the outlet of the extruder head 2, means the reference to the point at which the extruded material exits the outlet of the extruder head 2 and is deposited on the side surface of the build platform 1, regardless of the inclination of the extruder head 2 itself. Notably, in the embodiment of the 3D printing apparatus shown in Fig. 1, the extruder head 2 remains stationary while the build platform 1 undergoes rotational movement.

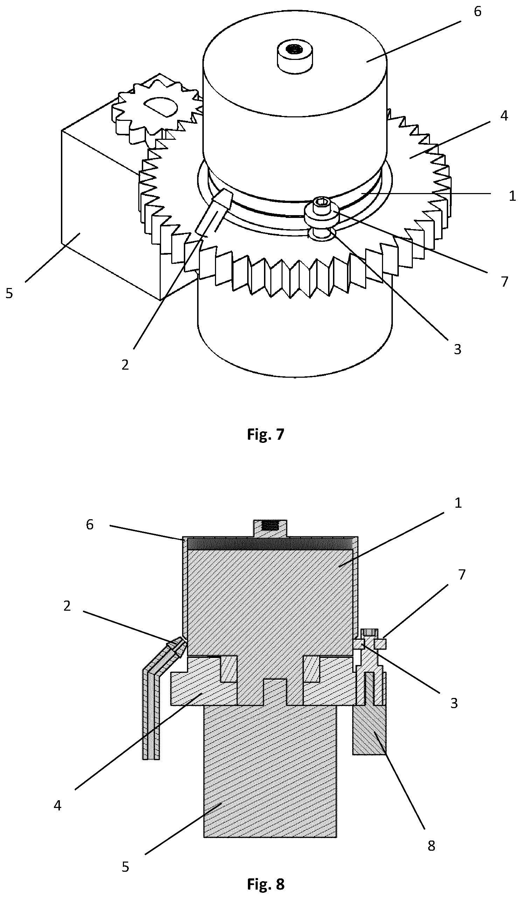

In alternative embodiments, the build platform 1 may be stationary, while the extruder head 2 moves along its perimeter, providing the necessary relative motion between the build platform 1 and the extruder head 2. Such an embodiment of the invention is illustrated in an axonometric view in Fig. 7, where the base plate 4 takes the form of a gear with teeth arranged around its perimeter. In this configuration, both the extruder head 2 and at least one pushing element 3 are mounted on the upper surface of the base plate 4 and rotate with it around the lateral surface of the stationary build platform 1 during the manufacturing process of the longitudinal hollow beam. The rotational movement of the base plate 4, along with its mounted components, including the extruder head 2 and at least one pushing element 3, is driven by an additional gear that meshes with the teeth of the base plate 4. This additional gear is mounted on the shaft of the drive system 5, as illustrated in Fig. 7.

It is important to emphasize that in this invention, the extruder head 2 may be of any design and utilize any technology, provided that it delivers material in a semiliquid state onto the lateral surface of the build platform 1 during the printing operation. Consequently, the outlet of the extruder head 2 is directed toward this lateral surface. The construction and technology of the extruder head 2 are therefore selected according to the building material used to manufacture the longitudinal hollow beams.

Non-limiting examples of such materials include plastics or thermal polymers, metals such as aluminum, copper, steel, and various alloys, resins such as photopolymers, as well as chocolate, clay, and other extrudable substances that harden after deposition. In the 3D printing apparatus according to this invention, any material capable of extrusion and subsequent solidification can be used. The extrusion amount can be adjusted to account for curvature or other external factors.

As illustrated in Fig. 2 and Fig. 3, the 3D printing apparatus according to the present invention is equipped with a cap 6, which is placed on the build platform 1. The cap 6 is not a mandatory component of the 3D printing apparatus; however, it is a beneficial element.

In the embodiment of the 3D printing apparatus shown in Fig. 2 and Fig. 3, the cap 6 has a cylindrical shape and resembles a hollow cylindrical vessel. The cap 6 is fully mounted on the upper surface and covers most of the lateral surface of the build platform 1. The internal dimension (diameter) of the cap 6 is slightly larger than the external dimension (diameter) of the build platform 1, allowing the cap 6 to be loosely fitted onto the build platform 1. In alternative embodiment of the invention the cap 6 may have only a side wall and no top wall, or may have only a top wall and no side wall.

The cap 6 serves as a starting point to which the beginning of the printed material is attached, which helps with print consistency. Additionally, the cap 6 can be used as a mounting element for external components of complex systems (e.g., rolled-up solar panels) in various applications of the 3D printing apparatus. In such applications, the production of the longitudinal hollow beam functions as an actuator to move individual system components (e.g., unrolling solar panels as a result of continuous production of the longitudinal hollow beam, where one end of the rolled-up solar panel is attached to the cap 6 located at the distal end).

However, it should be emphasized that the cap 6 is not a mandatory element in this invention, and the 3D printing apparatus according to the present invention can operate without the cap 6, as illustrated in Fig. 1.

One of the essential components of the 3D printing apparatus according to the present invention is at least one pushing element 3. In the embodiments of the invention illustrated in Fig. 1-3, three pushing elements 3 take the form of rotating rollers, which can rotate around axes parallel to the rotational axis of the build platform 1.

Each pushing element 3 features a pushing surface 7, which is primarily located on the upper surface of the roller. The illustrated pushing elements 3 are arranged around the circumference of the build platform 1 in close relation to its lateral surface, ensuring contact between the edge of the pushing surface 7 and the lateral surface of the build platform 1. In this embodiment, the pushing elements 3 in the form of rollers rotate together with the build platform 1 (but in the opposite direction), with free rotational movement enabled by bearing systems, including but not limited to slide bearings or ball bearings.

In alternative embodiments, different types of pushing elements 3 may be used, which, for example, do not exhibit rotational movement, but rather maintain sliding contact between the edge of the pushing surface 7 and the lateral surface of the build platform 1. As previously mentioned, the number of pushing elements 3 is not limited to three, nor is their arrangement restricted to being evenly distributed around the circumference of the build platform 1.

Importantly, at least one pushing element 3 is positioned at such a distance from the extruder head 2 that the extruded material deposited onto the lateral surface of the build platform 1-being transported due to the rotational movement of the build platform 1-reaches the pushing element 3 in a hardened state. This allows the material to be pushed away from the extruder head 2 as it moves along the pushing surface 7. A detailed description of the process for manufacturing longitudinal hollow beams using the 3D printing apparatus according to this invention will be provided in the following sections.

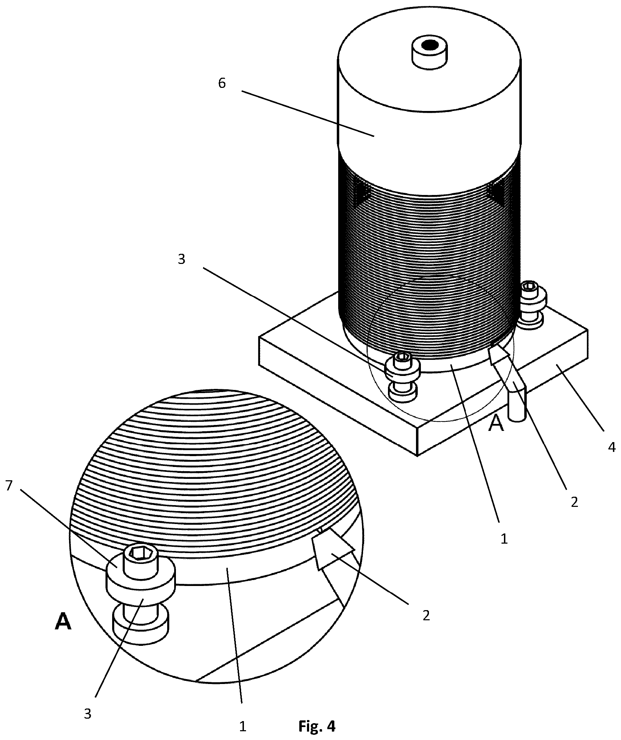

Importantly, the first pushing element 3 positioned along the circumference of the build platform 1 must have a specifically determined height relative to the extruder head 2. More specifically, this height pertains to the positioning of the pushing surface 7 in relation to the outlet of the extruder head 2. Only when the pushing element 3 is positioned so that the pushing surface 7 makes contact with the extruded and hardened material-forcing the material to be pushed away from the extruder head 2-can continuous helical printing of a longitudinal hollow beam be achieved. In this process, adjacent helical loops are arranged one on top of the other, as shown in the magnified detail A in Fig. 4, forming an essentially continuous structure of the longitudinal hollow beam.

The height of the pushing surface 7 will influence the height and thickness of the printed layer, with a direct correlation between the vertical distance between the pushing surface 7 and the outlet of the extruder head 2.

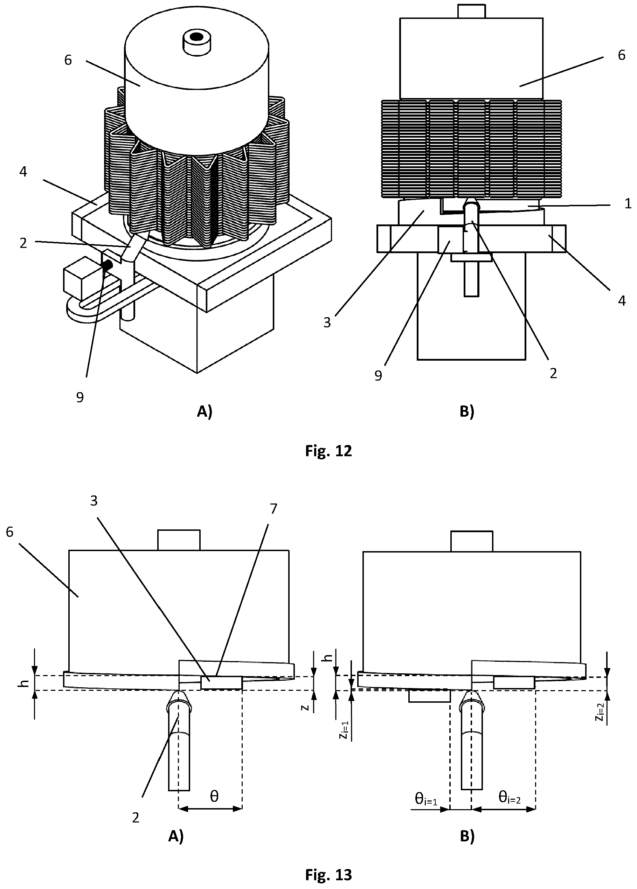

The method of determining the geometric parameters of a 3D printing apparatus, particularly the height of the pushing surface 7 of the pushing element 3, is shown in the schematic side views in Fig. 13A-B for two different embodiments, i.e. an embodiment in which there is one pushing element 3 in the 3D printing apparatus (Fig. 13A), which is arranged at an angular distance from the extruder head 2 close to a full rotation (i.e. close to 2π) and an embodiment in which there are two pushing elements 3 in the 3D printing apparatus (Fig. 13B), wherein the first pushing element 3 is arranged at a close angular distance from the extruder head 2 (in the direction of movement of the layer of extruded material) and the second pushing element 3 is arranged at an angular distance from the extruder head 2 close to a full rotation (i.e. close to 2π).

A formula can be used to determine the appropriate height at which the pushing surface 7 should be placed relative to the height of the outlet of the extruder head 2: $z = h ⋅ \frac{θ}{2 π}$ Where:
z - the height of the pushing surface 7 of the pushing element 3
h - desirable layer height
θ - angular distance of the pushing surface 7 of the pushing element 3 from the outlet of the extruder head 2, in radians (from 0 to 2π).

In cases where more than one pushing element 3 is used, such as in the embodiment illustrated in Fig. 2-4, where the 3D printing apparatus according to this invention includes three pushing elements 3, they are arranged equally in a helical configuration around the circumference of the build platform 1. The individual height of each pushing element 3 (specifically, the height of their pushing surfaces 7) relative to the extruder head 2 (its outlet) can be determined using the following formula: ${z}_{i} = \frac{h}{2 N} + \frac{h}{N} ∗ \left(i-1\right)$ Where:
zᵢ - the height of the pushing surface 7 of the pushing element 3
h - desired layer height
N - total number of pushing elements 3 (wherein one pushing element 3 is the minimum)
i - the number of the support element 3 in the circular sequence, counted from the extruder head 2 in the direction opposite to the rotation of the build platform 1.

Figure 13B shows an embodiment of a 3D printing apparatus that includes two pushing elements 3, wherein the pushing surfaces 7 of the respective pushing elements 3 are arranged at different heights (zᵢ₌₁, zᵢ₌₂) depending on the angular distance (θᵢ₌₁, θᵢ₌₂) of the pushing element 3 (or rather the leading edge of its pushing surface 7) in an increasing array.

The number of pushing elements 3 can vary from a minimum of one pushing element 3 or to ten or more pushing elements 3, depending on the diameter of the build platform 1 and the size of the pushing elements 3. In cases where more than one pushing element 3 is used, the height of each pushing element 3 must be adjusted so that they form a helix around the build platform 1, with the highest pushing surface 7 being the last in the circular sequence starting from the extruder head 2 and counting counterclockwise relative to the build platform's direction of rotation.

Depending on the rotational direction of the build platform 1, the minimum and maximum height of the pushing surface 7 of the pushing element 3 will be determined. If the build platform 1 rotates clockwise, the maximum height of the pushing surface 7 of the pushing element 3 will be positioned just before the extruder head 2 on the right-hand side, while the minimum height of the pushing surface 7 of the pushing element 3, which is equal to or lower than the height of the extruder head 2 at its outlet, will be located on the left-hand side. If the build platform 1 rotates counterclockwise, the reverse will be true.

In the embodiment of the 3D printing apparatus according to the present invention, as shown in Fig. 1 to 4, the pushing element 3 takes the form of a roller, the upper surface of which constitutes the pushing surface 7, coming into contact with the printed material after it has hardened, so that a pushing force is exerted on the printed and hardened material, moving it away from the extruder head 2 substantially along the axis of rotation of the build platform 1. In alternative embodiments of the invention, different types of pushing elements 3 may be used, provided they include a pushing surface 7 positioned at such a location along the circumference and at such a height that the technical effect of pushing the printed material away is achieved. The type of pushing element 3 is therefore not limited to the embodiment described herein, and alternative configurations may include different pushing elements 3 with a pushing surface 7 possessing the characteristics specified above. Non-limiting embodiments of pushing elements 3 are illustrated in Fig. 5A to 5C. More specifically, in Fig. 5A, the pushing element 3 is a roller, wherein the rotational axis of the roller is arranged substantially perpendicular to the roller shown in Fig. 1 to 4. In this case, the pushing surface 7 is the lateral surface of the roller element, and the height calculations for the pushing surface 7 relative to the extruder head 2, as discussed above, apply to the highest point of the pushing element 3, that is, the point on the lateral track of the roller that is farthest from the base plate 4. In Fig. 5B, the pushing element 3 is a pin, the upper surface (top end) of which constitutes the pushing surface 7. The pin is a stationary element arranged in a sliding relationship with the lateral surface of the build platform 1. In Fig. 5C, an another form of the pushing element 3 is shown, which constitutes a ring-shaped structure whose upper surface forms the pushing surface 7, wherein the pushing surface 7 is continuous along the entire circumference of the ring forming the pushing element 3 and exhibits a continuous change in height along the entire circumference. In further alternative embodiments of the 3D printing apparatus according to the present invention, the pushing element 3 may have a pushing surface 7 inclined towards the direction from which the printed material approaches, particularly within an angular range of 0 to 30 degrees. Such an inclination of the pushing surface 7 increases the contact surface between the printed material and the pushing surface 7, reducing the risk of damage to the printed material, especially at the edge region of the pushing surface 7.

An embodiment of the method for 3D printing of a longitudinal hollow beam according to the present invention is carried out using the 3D printing apparatus described above and proceeds as follows.

To initiate the printing of the longitudinal hollow beam, material begins to be extruded from the extruder head 2, which is deposited through the outlet of the extruder head 2 onto the lateral surface of the build platform 1. In cases where the 3D printing apparatus according to the present invention includes a cap 6, the printed material is initially deposited onto the lower edge of the cap 6, ensuring its attachment to it. Subsequently, during material extrusion, the build platform 1 is set into rotational motion by means of the drive system 5, for example, an electric motor. During extrusion, the build platform 1 is held in place with a bearing or a bushing, preventing any movement in directions other than rotational, while allowing it to rotate in either direction at speeds ranging from 0.1 rpm to 1000 rpm. As the build platform 1 rotates, the cap 6, which is friction-fitted onto it, rotates together with the build platform 1, allowing the pushing element 3 (for example, in the form of rollers shown in Fig. 2 to 4) to ride along its bottom surface as it rotates. As can be observed in Fig. 4, the build platform 1 rotates counterclockwise; however, in alternative embodiments, the build platform 1 may rotate in the opposite direction or even alternate between directions.

As the material is deposited in a helical pattern along the edge of the cap 6, it is allowed to harden (by cooling, curing, or any other hardening method) before reaching the first pushing element 3, specifically its pushing surface 7. This is achieved by adjusting the rotation speed of the build platform 1 between 0.1 rpm and 1000 rpm to allow the material to solidify. The material must harden to a sufficient degree to maintain its shape without deformation.

The material must be adequately hardened to prevent deformation upon reaching the pushing element 3. The required hardness depends on various factors, including the material used for printing. Without limitation, the lower threshold of the Shore Hardness scale should be met, such as a value of 10 on the Shore 00 scale, which covers virtually all degrees of softness.

Once the deposited layer reaches the pushing surface 7 of the pushing element 3, due to its predefined height placement, it slides beneath the layer and applies a force onto it, pushing the layer away from the pushing element 3 in an upward direction, as illustrated in Fig. 4. This upward displacement enables the deposition of additional material, which then hardens before reaching the pushing surface 7, and again, the layer is pushed upward by the pushing surface 7 due to the rotational force. This process repeats continuously until the printing process is completed, resulting in the formation of a longitudinal hollow beam, as shown in Fig. 4. The longitudinal hollow beam thus formed has a cross-sectional shape corresponding to the shape of the build platform 1. In this embodiment, it constitutes a cylindrical column with an inner diameter matching the outer diameter of the build platform 1.

Although in the embodiment of the invention shown in Fig. 4, the build platform 1 rotates relative to the stationary pushing elements 3 and extruder head 2, in alternative embodiments, it is possible to keep the build platform 1 stationary while rotating the pushing elements 3 and the extruder head 2, as illustrated, for example, in Figure 7.

### Example 2

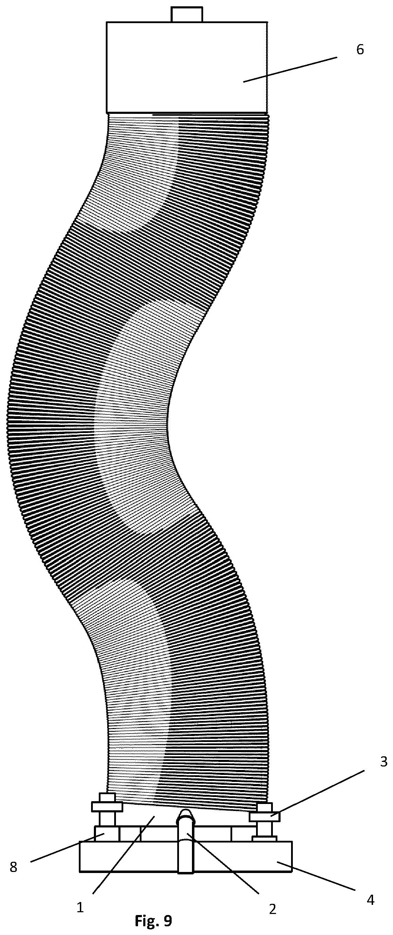

The second embodiment of the 3D printing apparatus according to the present invention is shown in cross-section in Fig. 8 and in a side view during operation in Fig. 9.

The 3D printing apparatus has a structure similar to that of the 3D printing apparatus presented in Example 1. Therefore, for clarity, similar components will not be described again in this description of the invention.

Unlike Example 1, in the second embodiment, the 3D printing apparatus comprises at least one pushing element 3, wherein the pushing element 3 has an adjustable height. As shown in the cross-section in Fig. 8, the pushing element 3 is equipped with a height adjustment system 8, which in this embodiment is an electrically operated system utilizing a precision electric actuator. However, the height adjustment system 8 is not limited to this configuration, and in alternative embodiments, any type of height adjustment system 8 can be employed, whether electrically controlled or manually operated (for example, based on a threaded screw screwed into a threaded hole in the base plate 4), provided that it allows for dynamic adjustment of the height of the pushing surface 7 of the pushing element 3 during the operation of the 3D printing apparatus according to the present invention.

If the height of the pushing surface 7 is adjusted during printing, it will cause the printed longitudinal hollow beam to bend with each newly deposited layer in a direction determined by the positioning and height of the pushing element 3. This process can be controlled, enabling the production of curved beams, as illustrated in the side view in Fig. 9. If the 3D printing apparatus according to the present invention includes multiple pushing elements 3 arranged around the perimeter of the build platform 1, they can be synchronized to gradually modify the printing direction.

When printing under normal Earth gravity, the printed parts will not be self-supporting and will require additional support during the printing process. This can be achieved using a suspension mechanism, such as strings on a linear rail, or alternatively, the entire mechanism can be positioned on its side, allowing the beam to rest on a table during printing.

### Example 3

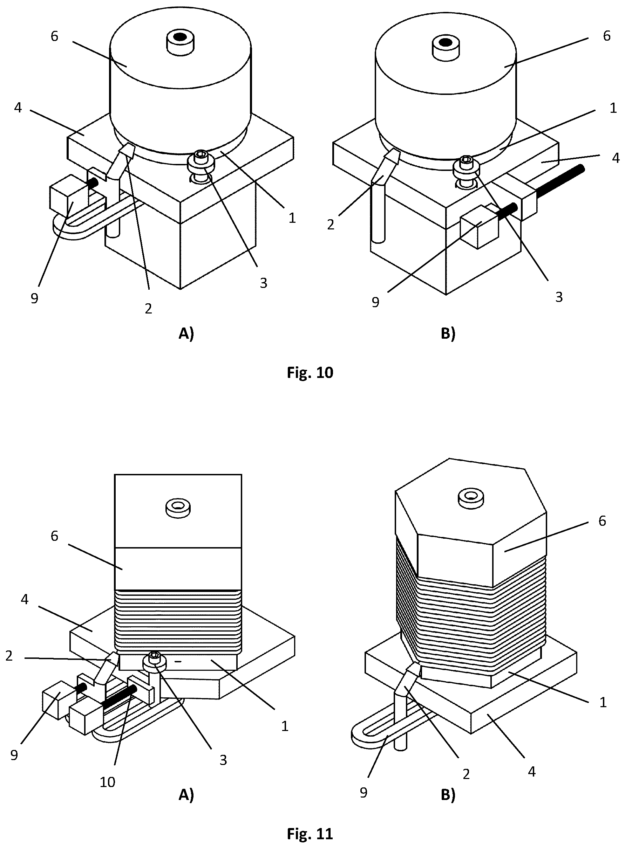

Another embodiment of the 3D printing apparatus according to the present invention is shown in axonometric views in Fig. 10A and 10B.

The 3D printing apparatus in this embodiment has a structure similar to the one presented in Example 1. Therefore, for clarity, similar components will not be described again in this description of the invention.

Unlike Example 1, in this embodiment, the 3D printing apparatus includes an extruder head offset system 9, which enables the distance of the extruder head 9 from the side surface of the build platform 1 to be changed. In Fig. 10A, a 3D printing apparatus according to the present invention is shown, in which the extruder head offset system 9 is mounted to the extruder head 2 and provides lateral movement of the extruder head 2 relative to the build platform 1. In this embodiment, the extruder head offset system 9 is implemented as a screw-driven mechanism enabling lateral displacement of the extruder head 2. However, the type of mechanism used in the extruder head offset system 9 is not limited to the one shown in Fig. 10A, and alternative embodiments of the 3D printing apparatus may incorporate any mechanism allowing for the lateral movement of the extruder head 2 relative to the side surface of the build platform 1, including, but not limited to, geared mechanisms such as rack and pinion, belts, or friction drives.

In another alternative embodiment of the invention, the extruder head offset system 9 may facilitate the movement of the base plate 4 along with the build platform 1 and the pushing element 3 relative to a stationary extruder head 2, as schematically illustrated in Fig. 10B.

Providing an additional axis of lateral displacement for the extruder head 2 relative to the build platform 1 through the extruder head offset system 9 enables the fabrication of longitudinal hollow beams with more complex external shapes. An example of producing a more complex-shaped longitudinal hollow beam is shown in Fig. 12A and 12B, where a new layer of material is printed onto the side of previously deposited layers. These new layers do not have to be continuous, allowing for the creation of different shapes on the side of the printed layer.

To achieve this, as before, a simple initial layer is printed, against which the pushing element 3 can push. Once the first layer is printed, the pushing element 3 retracts to avoid pushing it upward immediately, allowing the build platform 1 to rotate in the opposite direction while the extrusion head 2 repositions itself as the build platform 1 rotates, enabling the printing of a new layer on the side of the first layer.

Fig. 12A and 12B illustrate the longitudinal hollow beam with an inner layer formed as a cylinder and an outer layer shaped like a multi-pointed star. Additionally, the embodiment of the 3D printing apparatus shown in Fig. 12A and 12B features a pushing element 3 in the form of a ring-like structure, on the upper surface of which the pushing surface 7 is arranged, similar to the configuration presented in Fig. 5C.

### Example 4

Another embodiment of the 3D printing apparatus according to the present invention is shown in axonometric views in Fig. 11A and 11B.

The 3D printing apparatus in this embodiment has a structure similar to the one presented in Example 3. Therefore, for clarity, similar components will not be described again in this description of the invention.

Unlike Example 3, in this embodiment, the 3D printing apparatus additionally includes a pushing element offset system 10, which enables the distance of the pushing element 3 from the side surface of the build platform 1 to be adjusted. The pushing element offset system 10 is shown in Fig. 11A and has a structure analogous to the extruder head offset system 9, and it can be implemented using the same technical means.

Importantly, the pushing element offset system 10 is designed to change the lateral position of the pushing element 3 relative to the side surface of the build platform 1. This enables the use of a build platform 1 with a shape other than a cylinder, such as a rectangular prism build platform 1 shown in Fig. 11A or a regular hexagonal prism build platform 1 shown in Fig. 11B. (Note that in Fig. 11B, the pushing element 3 and the pushing element offset system 10 are positioned on the opposite side of the extruder head 2, making them not visible in this view.)

The dynamic adjustment of the distance between the pushing element 3 and the side surface of the build platform 1 allows the pushing element 3 to follow the contour of the side surface of the build platform 1, ensuring the repelling action of the pushing surface 7 on the printed material around the entire perimeter of the build platform 1.

As a result, it is possible to continuously print longitudinal hollow beams with a cross-section corresponding to the shape of the build platform 1. These may include, but are not limited to, regular or irregular prisms with triangular, quadrilateral, pentagonal, hexagonal, or higher-order polygonal bases, elliptical cylinders, or other shapes with irregular perimeters.

It is important to emphasize that if a build platform 1 of a specific shape is used, the cap 6, which is a component of the 3D printing apparatus according to the present invention, has a shape corresponding to the build platform 1, as illustrated in Fig. 11A and 11B.

### List of references:

1 - build platform
2 - extruder head
3 - pushing element
4 - base plate
5 drive system
6 - cap
7 - pushing surface
8 - height adjustment system
9 - extruder head offset system
10 - pushing element offset system

## Claims

1. A 3D printing apparatus comprising:
a build platform (1),
an extruder head (2), whose outlet is directed towards the lateral surface of the build platform (1),
and at least one pushing element (3), which is positioned in the peripheral region of the build platform (1) so that it is adjacent to its side surface,
a drive system (5) configured to cause rotation of the build platform (1) relative to the at least one pushing element (3) and the extruder head (2),
**characterized in that**
the at least one pushing element (3) has a pushing surface (7) positioned at a height greater than the outlet of the extrusion head (2) relative to the build platform (1), such that during the printing process, the rotational movement of the build platform (1) or the extruder head (2) with at least one pushing element (3) causes the pushing surface (7) to make contact with the extruded and hardened material at a position that forces the material to be pushed away from the extrusion head (2).

2. The 3D printing apparatus according to claim 1, **characterized in that** the height at which the pushing surface (7) is placed relative to the height of the outlet of the extruder head (2) follows formula $z = h ⋅ \frac{θ}{2 π}$ Where:
z - the height of the pushing surface (7) of the pushing element (3)
h - desirable layer height
θ - angular distance of the pushing surface (7) of the pushing element (3) from the outlet of the extruder head (2), in radians (from 0 to 2π).

3. The 3D printing apparatus according to claim 1 or 2, **characterized in that** the 3D printing apparatus further comprises a cap (6) mounted on the build platform (1), wherein the cap (6) is loosely fitted onto the build platform (1).

4. The 3D printing apparatus according to any of claims 1 to 3, **characterized in that** the drive system (5) includes electric drive, manual drive, hydraulic drive, pneumatic drive or magnetic drive.

5. The 3D printing apparatus according to claim 4, **characterized in that** the drive system (5) includes stepper motor, servo motor, brushed motor or brushless motor.

6. The 3D printing apparatus according to any of claims 1 to 5, **characterized in that** the build platform (1) is rotatable, and the extruder head (2) and at least one pushing element (3) are fixed, or the build platform (1) is fixed, and the extruder head (2) and at least one pushing element (3) are rotatable.

7. The 3D printing apparatus according to any of claims 1 to 6, **characterized in that** the at least one pushing element (3) is in the form of a roller with a pushing surface (7) on the lateral track, a roller with a pushing surface (7) on the top surface, a pin with a pushing surface (7) on top end or a ring-shaped structure whose upper surface forms the pushing surface (7).

8. The 3D printing apparatus according to any of claims 1 to 7, **characterized in that** the 3D printing apparatus comprises a multiple pushing elements (3) arranged along the perimeter of the build platform (1), where each pushing element (3) has a different height of the pushing surface (7) relative to the outlet of the extruder head (2), with the height of the pushing surface (7) of the pushing element (3) closest to the direction opposite to the movement of the printed material being greater than the height of the pushing surface (7) of the pushing element (3) closest to the direction of the movement of the printed material.

9. The 3D printing apparatus according to any of claims 1 to 8, **characterized in that** the at least one pushing element (3) has an adjustable height by use of a height adjustment system (8).

10. The 3D printing apparatus according to any of claims 1 to 9, **characterized in that** the 3D printing apparatus further comprises an extruder head offset system (9) configured to change the distance of the extruder head (9) from the side surface of the build platform (1).

11. The 3D printing apparatus according to any of claims 1 to 10, **characterized in that** the 3D printing apparatus further comprises a pushing element offset system (10) configured to change the distance of the pushing element (3) from the side surface of the build platform (1).

12. The 3D printing apparatus according to any of claims 1 to 11, **characterized in that** the build platform (1) has shape of a cylinder, a regular or irregular prism with a triangular, quadrilateral, pentagonal, hexagonal, or higher-order polygonal base, an elliptical cylinder, or another figure with an irregular perimeter.

13. A method for 3D printing of longitudinal hollow beam by a 3D printing apparatus having a build platform (1), an extruder head (2), whose outlet is directed towards the lateral surface of the build platform (1), and at least one pushing element (3), which is positioned in the peripheral region of the build platform (1) so that it is adjacent to its side surface, a drive system (5) configured to cause rotation of the build platform (1) relative to the at least one pushing element (3) and the extruder head (2), the method comprising:
a) rotating the build platform (1) relative to the at least one pushing element (3) and the extruder head (2) or rotating the at least one pushing element (3) and the extruder head (2) relative to the build platform (1),
b) extruding a printing material from the extrusion head (2) onto the side surface of the build platform (1),
**characterized in that,** the method further comprising:
c) allowing the extruded and hardened printing material to reach the pushing surface (7) of the pushing element (3) that is configured to push the extruded and hardened printing material away from the extruder head (2).

14. The method for 3D printing of longitudinal hollow beam according to claim 13, **characterized in that** the method further comprising changing the height of the pushing surface (7) of the at least on pushing element (3).

15. The method for 3D printing of longitudinal hollow beam according to claim 13 or 14, **characterized in that** the method further comprising extruding a printing material from the extrusion head (2) onto the side area of the previously extruded printing material, by changing the distance of the extruder head (9) from the side surface of the build platform (1).
